# EUROPÄISCHE PATENTANMELDUNG

(11) **EP 3 323 583 A1**
(43) Veröffentlichungstag der Anmeldung: **23.05.2018**
(21) Anmeldenummer: 17202754.2
(22) Anmeldetag: 21.11.2017
(51) Int. Cl.: B29C 45/00, B29C 45/14, F16J 3/02, F16K 7/12, F16K 27/02, B29L 31/00

(54) **MEMBRANANORDNUNG UND VERFAHREN ZU DEREN HERSTELLUNG**

(30) Priorität: 21.11.2016 DE 102016122303
(71) Anmelder: SISTO Armaturen S.A., 6468 Echternach (LU)
(72) Erfinder: Leisen, Bruno, 6468 Echternach (LU); Nummer, Marco, 6468 Echternach (LU)
(74) Vertreter: Graf, Hans

(57) **Zusammenfassung**

Die Erfindung betrifft eine Membrananordnung (5) sowie ein Verfahren zur deren Herstellung. Erfindungsgemäß wird mindestens eine Lage (14, 15) durch Spritzgießen erzeugt. Zwischen den beiden Lagen (14, 15) wird eine Gewebe-Einlage (16) positioniert. Es erfolgt eine Vulkanisation der Lagen (14, 15) mit der Gewebe-Einlage (16). Dabei können alternativ entweder ein paralleles Injection-Moulding von zwei Membranhälften und mit einer finalen Verschmelzung der Gewebe-Einlage im Sandwichverfahren zur Anwendung kommen oder ein ergänzendes Injection-Moulding zu einer vorab vorgefertigten eingelegten Gummi-/Gewebe-/Schrauben-Kombination.

## Beschreibung

Die Erfindung betrifft ein Verfahren zur Herstellung einer Membrananordung sowie die Membrananordnung selbst und deren Verwendung.

Solche Membrananordnungen werden beispielsweise in Membranventilen oder Membranpumpen eingesetzt. Bei Membranventilen dichtet die Membrananordnung das Ventil auf einem Dichtsteg ab. Ein solches Membranventil wird beispielsweise in der DE 195 05 747 A1 beschrieben.

Bei einer Membranpumpe wird das zu fördernde Medium durch die Membrananordnung vom Antrieb getrennt.

Die eingesetzten Membrananordnungen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membrananordnung ist deren Beweglichkeit, das heißt die Fähigkeit, senkrecht zur Einspannfläche (Membranfläche) einen Hub auszuführen, der mechanisch angetrieben bedingt sein kann oder infolge einer Druckdifferenz erfolgen kann. Weiterhin ist die Beständigkeit der Membrananordnung von Bedeutung, insbesondere wenn aggressive Medien gefördert werden.

Die Bewegungsfähigkeit und Beständigkeit einer Membrananordnung hängt im Wesentlichen von der Werkstoffkombination ab, aus der die Membrananordnung besteht. Als Grundwerkstoffe werden hauptsächlich Elastomere verwendet, die zur Erzielung einer höheren Festigkeit mit Gewebeeinlagen verstärkt werden können. Als Elastomere haben sich bei Membrananordnungen Elemente aus Ethylen-Propylen-Dien-Kautschuk (EPDM) bewertet. Bei Ethylen-Propylen-Dien-Kautschuken (EPDM) handelt es sich um terpolymere Elastomere (Gummi) und somit um synthetische Kautschuke. Die Herstellung erfolgt in der Regel mit Metallocen oder Ziegler-Natta-Katalysatoren. Das Material zeichnet sich durch eine hohe Elastizität und gute chemische Beständigkeit aus.

Zur Herstellung von solchen Membrananordnungen lassen sich bei Flachmembranen die einzelnen Elastomer-Elemente aus einem vorgefertigten Bahnmaterial ausstanzen. Allerdings müssen Flachmembranen beim Einbau vorgespannt werden, um einen geeigneten Betrieb zu gewährleisten. Formmembranen haben den Vorteil eines größeren Hubes, einer geringeren Wirkflächenänderung über den gesamten Hubbereich und eine einfache Montage (ohne Vorspann-Operation). Sie werden entweder ebenfalls aus Bahnmaterial durch Kulturprägen oder Tiefziehen, oder aber direkt durch Formvulkanisation hergestellt.

In der DE 1 177 885 wird ein Verfahren zur Herstellung einer formgepressten Membran beschrieben. Die formgepresste Membran besteht aus verschiedenen Schichten aus Elastomeren und Geweben. Die Elastomere und Stoffschichten werden in eine Form gebracht, in welcher sie mithilfe einer hydraulischen Presse festgeklemmt und verformt werden. Dann wird die Form auf eine erhöhte Temperatur erwärmt, die eine bestimmte Zeit lang aufrechterhalten wird. Die Dauer der Wärmehärtung hängt von der Art und dem Volumen des Elastomeren ab. Nach dem Härten sind die elastomeren Schichten miteinander verschmolzen, und der Querschnitt der Membran zeigt eine homogene Masse, welche von Gewebeverstärkungen durchsetzt ist.

Diese herkömmlichen Verfahren zur Herstellung von Membrananordnungen nach dem Stand der Technik werden auch als Formpressen (Compression Moulding) bezeichnet. Formpressen ist ein Herstellungsverfahren für leicht gewölbte oder flache Bauteile. Dabei können auch thermoplastische Kunststoffe bzw. Elastomere verarbeitet werden. Zu Beginn des Verfahrens wird eine Formmasse in eine Kavität eingebracht, welche aufgeheizt wird. Anschließend wird die Kavität unter Einsatz eines Druckkolbens geschlossen. Durch den Druck erlangt die Formmasse, die vom Werkzeug vorgegebene Form. Bei Elastomeren führt dies zum Schmelzen des Kunststoffs. Nach dem Abkühlen kann das fertige Teil aus dem Formwerkzeug entnommen und nach- bzw. weiterverarbeitet werden. Das Formpressen kann auch zur Herstellung von Membrananordnungen eingesetzt werden, unter anderem zur Herstellung von wasserverstärkten Membrananordnungen.

In der DE 43 23 856 A1 wird die Herstellung von gewebeverstärkten Membranen (insbesondere Formmembranen) durch Formvulkanisieren beschrieben. Da beim Formvulkanisieren das Verstärken der Gewebe zusammen mit dem Elastomer in die entsprechende Vulkanisierform eingebracht wird, kommt es bei komplizierten Formen leicht zu Verschiebungen bzw. lokalen Aufstauchungen des Gewebes, die dazu führen, dass bei der fertigen Membran an diesen Stellen entweder die mechanischen Eigenschaften von den gewünschten Werten abweichen oder das Gewebe in unerwünschter Weise an die Oberfläche tritt, dort dem Angriff des angrenzenden Mediums ausgesetzt ist, und so eine Schwachstelle für die Membrananordnung bildet.

Weiterhin besteht bei gewebeverstärkten Membrananordnungen grundsätzlich der Nachteil, dass sie mehrschichtige Verbundkörper bilden, deren einzelne Schichten (Elastomerschichten und Gewebeschichten) unterschiedliche mechanische Eigenschaften aufweisen, sodass sich das einvulkanisierte Gewebe durch die Walkbewegung der Membran während des Betriebs mit der Zeit von der aufliegenden Elastomerschichten ablösen kann und die Membran auf diese Weise unbrauchbar wird.

Schließlich führt die Einlage eines durchgehenden Verstärkens des Gewebes dazu, dass über der gesamten Membranfläche wesentliche mechanische Eigenschaften der Membran, wie zum Beispiel die Dehnbarkeit, durch die Art des Gewebes vorbestimmt und konstant sind. Die DE 43 23 856 A1 schlägt zur Lösung des Problems vor, den Membrankörper durch eine Vielzahl von in das Elastomer eingebetteten Kurzfasern zu verstärken.

Eine solche Verstärkung ist aufwendig und bringt Nachteile bezüglich der Beweglichkeit der Membrananordnung mit sich.
Aufgabe der Erfindung ist es, eine Membran zu stellen, die eine hohe Beweglichkeit und eine sichere Abdichtung der zu trennenden Räume gewährleistet. Die Membran soll sich auf möglichst preiswerte Weise und mit einem möglichst geringen Materialausschuss herstellen lassen. Dabei soll sich die Membran durch eine hohe Lebensdauer und möglichst geringe Herstellungskosten auszeichnen. Mit dem Verfahren soll eine hohe Stückzahl an Membrananordnungen in möglichst gleichbleibender Qualität hergestellt werden können. Dabei soll die Gewebeeinlage präzise positionierbar sein und es sollen Gewebeschädigungen während des Herstellungsprozesses vermieden werden. Diese Aufgabe wird durch das erfindungsgemäße Verfahren zur Herstellung einer Membran nach Anspruch 1 und durch die erfindungsgemäße Membran nach Anspruch 7 gelöst.

Dabei erfolgt die Herstellung in mehreren Schritten. Mindestens eine Lage der Membrananordnung wird dabei durch Spritzgießen erzeugt. Das Spritzgießen (Injection-Moulding) ist ein Verfahren, bei dem mit einer Spritzgießmaschine der jeweilige Werkstoff verflüssigt (plastifiziert) wird und in eine geschlossene Form, dem Spritzgusswerkzeug unter Druck eingespritzt wird. Im Werkzeug geht der elastomere Werkstoff durch Abkühlung bzw. eine Vernetzungsreaktion wieder in den festen Zustand über. Nach dem Öffnen des Werkzeugs kann das Fertigteil entnommen werden. Der Hohlraum, die Kavität, des Werkzeugs bestimmt dabei die Form und die Oberflächenstruktur des fertigen Teiles. Das zur Herstellung mindestens einer Membranlage verwendete Elastomer wird in Streifen in die Gänge einer rotierenden Schnecke eingebracht. Die Elastomerstreifen werden in Richtung einer Schneckenspitze gefördert und durch die Wärme des Zylinders und die Formungswärme, die beim Verteilen und Scheren des Materials entsteht, erwärmt und aufgeschmolzen. Die Schmelze sammelt sich vor der Schneckenspitze. Die Schnecke ist meist axial beweglich. Sie weicht durch den Druck zurück. Die Schnecke schraubt sich ähnlich einem Korkenzieher aus der Masse heraus. Diese Rückwärtsbewegung wird durch einen Hydraulikzylinder oder elektrisch gebremst, sodass sich in der Schmelze ein Staudruck aufbaut. Dieser Staudruck in Verbindung mit der Schneckenrotation verdichtet und homogenisiert das Elastomermaterial.

In einer Einspritzphase wird die Spritzeinheit an eine Schließeinheit gefahren, mit der Düse angedrückt und die Schnecke rückseitig unter Druck gesetzt. Dabei wird die Schmelze unter hohem Druck von bis zu 2000 bar in die geöffnete Düse und durch den Anguss bzw. das Angusssystem des Spritzgusswerkzeugs in den vorgegebenen Hohlraum gedrückt. Eine Rückstromsperre verhindert ein Zurückströmen der Schmelze in Richtung Einfüllzylinder.

Während des Einspritzens wird versucht, ein möglichst laminares Fließverhalten der Elastomerschmelze zu erreichen. Das heißt, die Schmelze wird im Werkzeug dort, wo sie die gekühlte Werkzeugwand berührt, sofort abgekühlt und bleibt erstarrt kleben. Die nachrückende Schmelze wird durch den dadurch verjüngten Schmelzkanal mit noch höherer Geschwindigkeit und noch mehr Scherdeformation gedrückt und vor der Schmelzfront zum Rand hin deformiert. Es überlagert sich Wärmeabfuhr über die Werkzeugwand und Wärmezufuhrt durch die Schererwärmung. Die hohe Einspritzgeschwindigkeit erzeugt in der Schmelze eine Schergeschwindigkeit, welche die Schmelze leichter fließen lässt.

Da das Werkzeug kälter ist als die Elastomermasse, kühlt sich die Schmelze in der Form ab und erstarrt beim Erreichen des Verfestigungspunktes. Das Abkühlen geht einher mit einer Volumenschwindung. Um diese Schwindung teilweise zu kompensieren wird auch nach Füllung der Form ein reduzierter Druck aufrechterhalten, damit Material nachfließen und die Schwindung ausgleichen kann. Dieses Nachdrücken kann solange erfolgen, bis der Anguss erstarrt ist.

Nach Beendigung des Nachdrückens kann die Düse geschlossen werden und in der Spritzeinheit kann bereits der Plastifizier- und Dosiervorgang für das nächste Formteil beginnen. Das Material in der Form kühlt in der Restkühlzeit weiter ab bis auch der flüssige Kern der Membranlage erstarrt ist und eine zum Entformen hinreichende Steifigkeit erreicht hat.

Die Spritzeinheit kann dann von der Schließeinheit wegbewegt werden, da kein Elastomermaterial mehr aus dem Ausguss austreten kann.

Zum Entformen öffnet sich die Auswerferseite der Schließeinheit und das Membranelement bzw. die Membrananordnung wird aus der Kavität ausgeworfen.

Durch diesen stark kontrollierten Prozess ist es möglich, regelmäßig gleichbleibende Qualität bei den Spritzguss-Halbfertigprodukten und damit auch bei den fertigen Elastomerteilen zu erreichen.

Erfindungsgemäß wird zwischen zwei Elastomer-Lagen eine Gewebeeinlage angeordnet. Anschließend erfolgt eine Vulkanisation der Elastomer-Lagen mit der Gewebeeinlage. Vorzugsweise werden bei der Vulkanisation die Elastomer-Lagen, die neben EPDM auch Schwefel bzw. aus Schwefel verwertete Stoffe, wie zum Beispiel Schwefeldifluorid, Katalysatoren bzw. Zinkoxid oder Fettsäuren enthalten können, wie auch mit Feststoffen verwertet sein können, erhitzt. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Schwefelbrücken. Je mehr Schwefelbrücken vorhanden sind, desto härter ist der Gummi. Die Anzahl der Schwefelbrücken ist wiederum abhängig von der zugesetzten Schwefelmenge und der Dauer der Vulkanisation.

Neben der klassischen Schwefelvulkanisation kann auch eine Vernetzung von Kautschuken mittels Peroxiden, Metalloxiden oder energiereicher Strahlung erfolgen.

Bei einer Variante der Erfindung werden zumindest zwei Lagen zunächst durch Spritzgießen erzeugt. Dann wird eine Gewebeeinlage zwischen diesen beiden Lagen angeordnet und das so entstehende Compound wird vulkanisiert. Vor der Vulkanisation werden die Angüsse entfernt.
Bei allen Verfahren ist zu berücksichtigen, dass die Gewebeeinlage so innerhalb der Form und der Kavität verspannt oder fixiert wird, dass sie ihre Position auch während des Einspritzens der zweiten Lage hält. Damit ist gesichert, dass die Membran vorausbestimmbare feste Eigenschaften aufweist, da Position und Überdeckung der Gewebe-Einlage mit Polymer immer gleichbleibend ist.
Als besonders günstig erweist es sich, wenn bei der Membrananordnung ein stiftartiges Element formschlüssig in eine Lage integriert wird. Bei dem stiftartigen Element kann es sich um eine Membranschraube handeln. Die Membranschraube kann beispielsweise über eine Spindel mit einem Antrieb verbunden sein. Auf diese Weise kann die fertige Membran im Einsatz verformt werden.

Bei einer besonders vorteilhaften Variante wird das stiftartige Element an einem Kaltkanalwerkzeug festgelegt, beispielsweise kann es dort in ein Gewinde eingeschraubt werden, und dann wird das Kaltkanalwerkzeug an eine Form drangefahren, sodass ein Hohlraum gebildet wird. Das stiftartige Element wird dann durch Spritzgießen in einer Elastomer-Lage integriert, wobei bei dem Spritzgießen die Kavität mit dem flüssigen Elastomer durch Einspritzen gefüllt wird.

Beim Heranfahren des Kaltkanalwerkzeugs an die Form, in welchem die Kavitäten für die Bildung der Elastomer-Lagen ausgebildet sind, ragt das stiftartige Element in die von der Form und dem Kaltkanalwerkzeug gebildete Kavität hinein. Das Kaltkanalwerkzeug weist Kanäle auf, durch welche die flüssige Elastomermasse zu der Kavität geleitet wird. Die Kavität wird dann mit der flüssigen Elastomermasse ausgefüllt und das stiftartige Element wird in der Elastomermasse von zumindest einer Elastomer-Lage eingebettet. Das stiftartige Element wird durch Spritzgießen in der Lage integriert. Ergänzend oder alternativ kann auch neben der Elastomer-Lage mit dem stiftartigen Element eine weitere Elastomer-Lage mit einem Kaltkanalsystem erzeugt werden. Diese weitere Elastomer-Lage kann eine Öffnung aufweisen, durch die das stiftartige Element beim Zusammenfügen gesteckt werden kann. Erfindungsgemäß wird zwischen den beiden Lagen eine Membran-Einlage positioniert, die vorzugsweise ebenfalls eine Öffnung aufweist, durch die das stiftartige Element ragt. Nach Zusammenfügen der einzelnen Komponenten, das heißt also erster Elastomer-Lage, Membran-Einlage und zweiter Elastomer-Lage, wird das Compound zwischen zwei plattenartigen Elementen positioniert, die dann zur Vulkanisation zusammengepresst werden.

Alternativ ist es auch denkbar, dass zumindest eine Lage vorkonfektioniert wird und dann die weitere Lage durch Spritzgießen ergänzt wird. Die vorkonfektionierte Lage wird gemeinsam mit dem stiftartigen Element und der Gewebeeinlage in eine untere Form positioniert. Dann wird das System von einer oberen Form geschlossen, welche eine Kavität aufweist. Mittels Spritzgießen wird dann diese Kavität ausgefüllt, sodass sich die gewünschte Membrananordnung ausbildet. Die Elastomer-Lagen werden gemeinsam mit der Gewebe-Einlage vulkanisiert. Anscheinend erfolgt eine Artikelentnahme. Das erfindungsgemäße Verfahren, bei dem ein Injection-Moulding (IM) zur Anwendung kommt, ermöglicht eine präzise Gewebepositionierung und es werden Gewebeschädigungen während des Vulkanisationsprozesses vermieden. Dabei können alternativ entweder das zuvor beschriebene parallele Injection-Moulding von zwei Membranhälften und mit einer finalen Verschmelzung der Gewebe-Einlage im Sandwichverfahren zur Anwendung kommen oder ein ergänzendes Injection-Moulding zu einer vorab vorgefertigten eingelegten Gummi-/Gewebe-/Schrauben-Kombination. Mit dem erfindungsgemäßen Verfahren ist es möglich, trotz des während des Spritzgießens vorhandenen natürlichen Stoffschlusses in den Werkzeugkavitäten die Materialien und Werkstoffe genau zu positionieren und auch vor Zerstörung durch die extrem hohen Drücke zu bewahren. Die zuvor ausgeführten Verfahrensvarianten eröffnen Möglichkeiten zur Herstellung von hochwertigen Membrananordnungen, entweder durch Vorkonfektionierung und dem einseitigen Anspritzen einer Elastomer-Einlage oder durch das Anspritzen von zwei Elastomer-Einlagen in einem ersten Verfahrensschritt und einer Positionierung der Gewebe-Einlage in einem weiteren Arbeitsgang. Dadurch können Elastomer-Compound-Produkte mit ausreichend präzise platziertem Gewebe und ohne Gewebebeschädigungen hergestellt werden.

Durch dieses gewebeschonende Verfahren ist es weiter möglich spezielle Gewebe einzuarbeiten, insbesondere Gewebe mit spezieller Ausgestaltung zur Aufnahme von Kräften in besonderen Bereichen oder leitfähigen Geweben zur Detektion von Fehlern in der Membran oder zur Übermittlung von Signalen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine Schnittdarstellung einer Membrananordnung,
- Figur 3a: die erste Phase eines Verfahrens zur Herstellung einer Membrananordnung mit parallelem Injection-Moulding,
- Figur 3b: die zweite Phase eines Verfahrens zur Herstellung einer Membrananordnung mit parallelem Injection-Moulding,
- Figur 3c: die dritte Phase eines Verfahrens zur Herstellung einer Membrananordnung mit parallelem Injection-Moulding,
- Figur 3d: die vierte Phase eines Verfahrens zur Herstellung einer Membrananordnung mit parallelem Injection-Moulding,
- Figur 4a: die erste Phase eines Verfahrens zur Herstellung einer Membrananordnung mit einem ergänzenden Injection-Moulding (IM),
- Figur 4b: die zweite Phase eines Verfahrens zur Herstellung einer Membrananordnung mit einem ergänzenden Injection-Moulding (IM),
- Figur 4c: die zweite Phase eines Verfahrens zur Herstellung einer Membrananordnung mit einem ergänzenden Injection-Moulding (IM).

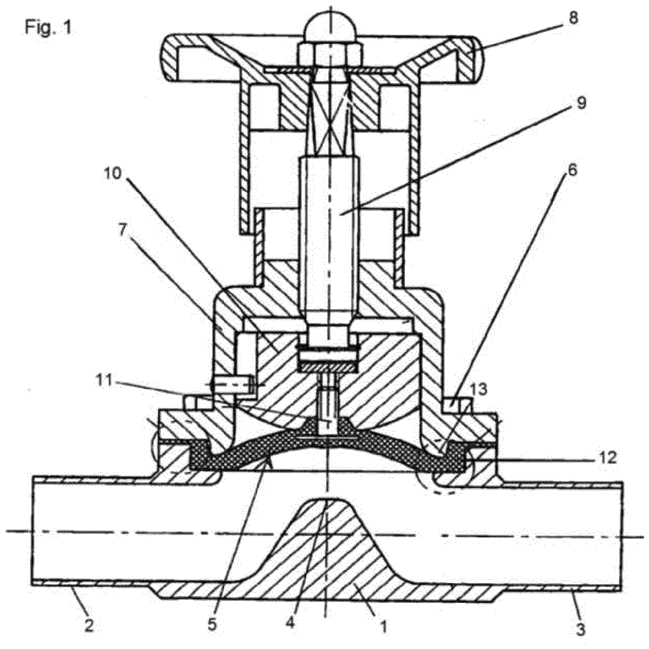

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membrananordnung 5. Die Membrananordnung 5 ist mithilfe von Schrauben 6 eingespannt zwischen dem Gehäuseunterteil 1 und einem Gehäuseoberteil 7. Im Gehäuseoberteil 7 sind die zur Betätigung der Membrananordnung 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass sich die Membran verformt und der freie Querschnitt zwischen dem Wehr und der Membrananordnung vergrößert bzw. verkleinert werden kann. Der Kontakt zwischen der Membrananordnung 5 und dem Anrtieb 8 wird verbessert durch die Verwendung eines stiftartigen Elements 11, das flächig mit der Membrananordnung 5 verbunden und mit dem Antrieb 8 beispielsweise verschraubt ist. Die spezielle Ausgestaltung der Membran zeigt in der Figur 1 eine gekammerte Membran, wobei der Randbereich 12 der Membrananordnung 5 in einer speziellen Fassung 13 die aus dem Gehäuseoberteil 7 und dem Gehäuseunterteil 1 gebildet wird.

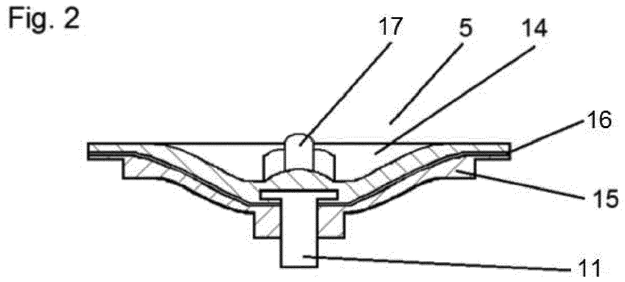

Figur 2 zeigt eine Schnittdarstellung einer Membrananordnung 5. Die Membrananordnung 5 umfasst eine erste Lage 14, die auf der Mediumseite angeordnet ist. Weiterhin umfasst die Membrananordnung 5 eine zweite Lage 15, welches die Rückseite der Membrananordnung 5 bildet. Die beiden Lagen 14 und 15 sind aus einem Elastomer gefertigt. Zwischen den beiden Elastomer-Lagen 14 und 15 ist eine Gewebe-Einlage 16 angeordnet. Weiterhin umfasst die Membrananordnung 5 das stiftartiges Element 11, das im Ausführungsbeispiel als Membranschraube ausgebildet ist.

Die erste Lage 14 der Membrananordnung 5, die der Mediumseite zugeordnet ist, weist eine Dichtlippe 17 auf. Das in Figur 2 dargestellte stiftartige Element 11 kann ein Gewinde aufweisen. Gemäß der Darstellung in Figur 1 ist das stiftartige Element 11 als Membranschraube ausgebildet und weist ein Außengewinde auf, das in ein Innengewinde eingeschraubt wird, welches in einem Druckstück 10 ausgebildet ist. Bei der Membrananordnung 5 gemäß der Darstellung in Figur 2 handelt es sich um ein Compound aus zwei Elastomer-Lagen 14, 15 und einer dazwischen angeordneten Gewebe-Einlage 16, die durch Vulkanisation miteinander verbunden sind.

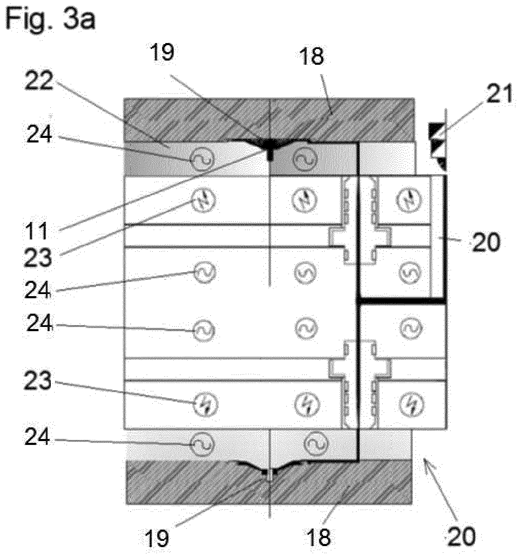

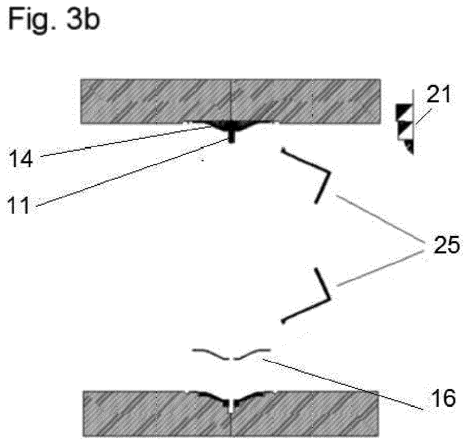

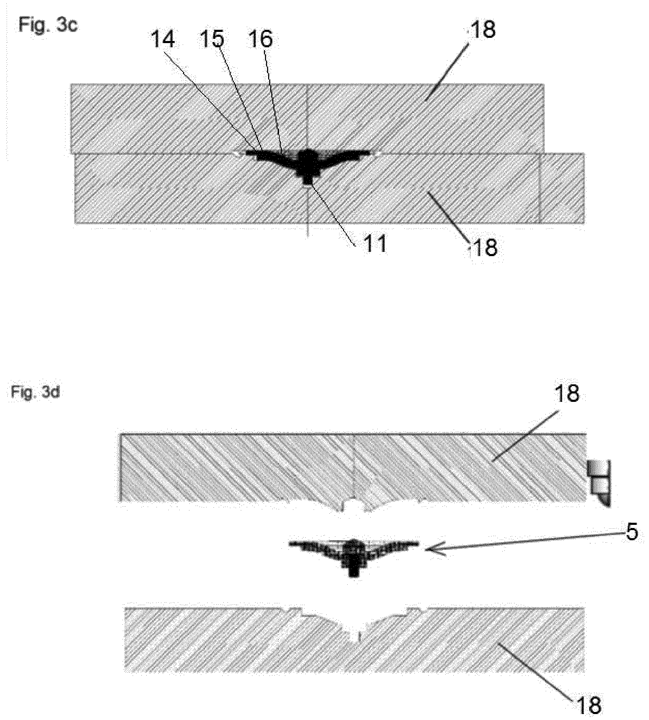

Die Figuren 3a, 3b, 3c und 3d zeigen nacheinanderfolgende Schritte eines ersten erfindungsgemäßen Verfahrens zur Herstellung von Membrananordnungen.

In Figur 3a ist ein Ausschnitt des für das erfindungsgemäße Verfahren notwendigen Spritzgusswerkzeuges schematisch dargestellt. Bei dem in Figur 3a dargestellten Werkzeug ist in einer Form 18 eine Kavität 19 ausgeführt. Erfindungsgemäß wird wenigstens eine Elastomer-Lage der Membrananordnung durch Spritzgießen erzeugt. Dieses umfasst im Ausführungsbeispiel ein Kaltkanalsystem 20. Als Kaltkanalsystem 20 werden Angusskanäle von Spritzgusswerkzeugen bezeichnet. Sie dienen dem angusslosen Elastomer-Spritzgießen. In den Kaltkanalsystemen wird die Temperatur auf einer Temperatur unterhalb der Werkzeugtemperatur gehalten. Befände sich die Elastomermasse im Ausgusskanal auf derselben Temperatur wie das Werkzeug, würde der Anguss mitvernetzen und müsste abgetrennt werden, das Material wäre unbrauchbar. Wird der Anguss aber auf einer kälteren Temperatur gehalten, so wird die Vernetzungsreaktion verzögert und das Material bleibt flüssig. Es wird beim nächsten Spritzvorgang in die Kavität 19 gedrückt und für das folgende Bauteil verwendet. Für eine optimale Funktionsweise müssen Angusskanal und Kavität 19 während des Entformens durch ein Nadelverschlusssystem getrennt werden.

Aus einer Düse 21 wird das flüssige Elastomermaterial durch ein Kanalsystem 20 zu der Kavität 19 geleitet. Das Kaltkanalsystem 20 weist eine Kaltkanalform 22 auf. In der Kaltkanalform 22 ist das stiftartige Element 11 auf einer Seite festgelegt. Gemäß der Darstellung in Figur 3a wird mit der Form 18, die mit Blick auf die Zeichnung oberhalb des Kaltkanalsystems angeordnet ist, die Mediumseite des Membranelements ausgebildet und mit der Form 18, die unterhalb des Kaltkanalsystems 20 angeordnet ist, die Membranrückseite. Die Membranrückseite weist eine Öffnung auf, in welche das stiftartige Element 11 eingreifen kann.

Das Kaltkanalsystem 20 weist Heizeinheiten 23 und Kühleinheiten 24 auf. Bei den Heizeinheiten 23 kann es sich beispielsweise um Widerstandsheizungen handeln, bei den Kühleinheiten 24 um Kanäle, durch die Öl zur Kühlung geleitet wird.

Das durch das Kaltkanalsystem 20 in die Kavität 19 geleitete Elastomermaterial erstarrt in dem Hohlraum der Kavität 19 und bildet die entsprechenden Lagen 14, 15 der Membrananordnung 5.

Gemäß der Darstellung in Figur 3b wird dann das Kaltkanalsystem 20 ausgefahren und die Angüsse 25 werden entfernt. Dann wird in einem nächsten Schritt eine Gewebe-Einlage 16 positioniert.

Gemäß der Darstellung in Figur 3c werden dann die beiden Hälften der Form 18 mit den ausgebildeten Elastomer-Lagen 14, 15 und der dazwischen positionierten Gewebe-Einlage 16 zusammengefahren und es erfolgt eine Vulkanisation. Gemäß dem in Figur 3d dargestellten Schritt werden die beiden Hälften der Form 18 wieder geöffnet und es erfolgt eine Artikelentnahme der Membrananordnung 5.

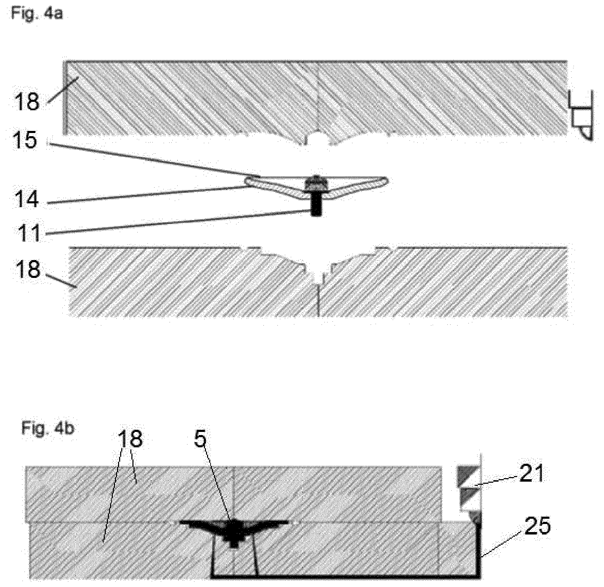

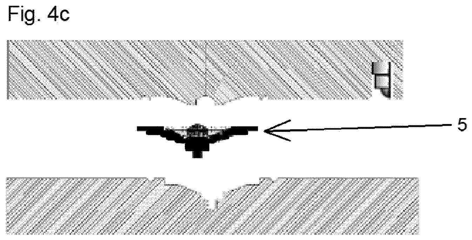

Die Figuren 4a, 4b und 4c zeigen eine alternative Variante des erfindungsgemäßen Verfahrens zur Herstellung der Membrananordnung. Auch bei diesem Verfahren wird mindestens eine Lage 14, 15 durch Spritzgießen erzeugt. In der Darstellung in Figur 4a wird eine Lage 15 vorkonfektioniert. Die vorkonfektionierte Lage wird in eine Hälften der Form 18 positioniert. Dabei enthält die vorkonfektionierte Lage 15 auch das stiftartige Element 11 und die Gewebe-Einlage 16. Dann wird die zweite Hälfte der Form 18, die eine Kavität 19 aufweist, geschlossen und es erfolgt ein Anspritzen der noch fehlenden Lage 14. Gemäß der Darstellung in Figur 4b sind dazu die beiden Hälften der Form 18 geschlossen. Figur 4c zeigt dann die Artikelentnahme der fertigen Membrananordnung 5.

**Bezugszeichen:**

| | |
|---|---|
| 1 Gehäuseunterteil | 14 erste Lage |
| 2, 3 Anschlüsse | 15 zweite Lage |
| 4 Wehr | 16 Gewebe-Einlage |
| 5 Membrananordnung | 17 Dichtlippe |
| 6 Schrauben | 18 Form |
| 7 Gehäuseoberteil | 19 Kavität |
| 8 Antrieb | 20 Kaltkanalsystem |
| 9 Spindel | 21 Düse |
| 10 Druckstück | 22 Kaltkanalform |
| 11 stiftartiges Element | 23 Heizeinheit |
| 12 Randbereich | 24 Kühleinheit |
| 13 Fassung | 25 Anguss |

## Patentansprüche

1. Verfahren zur Herstellung einer Membrananordnung (5) in einer geschlossenen Spritzgussform mit mindestens folgenden Schritten:
- Bereitstellung wenigstens einer ersten (14) und einer zweiten (15) Lage der Membrananordnung (5), wobei mindestens eine der beiden Lagen durch Spritzgießen in eine Kavität (19) einer geschlossenen Spritzgussform(18) erzeugt wird,
- Anordnung einer Gewebe-Einlage (16) zwischen zwei Lagen (14, 15),
- Herstellung einer innigen Verbindung der Anordnung erste Lage (14), Gewebe-Einlage (16) und zweite Lage (15),
- Vulkanisation der Lagen (14, 15) mit der Gewebe-Einlage (16).

2. Verfahren nach Anspruch 1, **dadurch gekennzeichnet, dass** vor der Vulkanisation Angüsse (25) entfernt werden.

3. Verfahren nach einem der Ansprüche 1 bis 2, **dadurch gekennzeichnet, dass** ein stiftartiges Element (11) formschlüssig in einer Lage (15) integriert wird.

4. Verfahren nach Anspruch 3, **dadurch gekennzeichnet, dass** das stiftartige Element (11) durch Spritzgießen in einer Lage (15) integriert wird.

5. Verfahren nach einem der Ansprüche 1 bis 4, **dadurch gekennzeichnet, dass** mindestens eine Lage (14, 15) mit einem Kaltkanalsystem (20) durch Spritzgießen erzeugt wird.

6. Verfahren nach einem der Ansprüche 1 bis 5, **dadurch gekennzeichnet, dass** mindestens eine Lage (14) vorkonfektioniert wird und dann eine zweite Lage (15) durch Spritzgießen ergänzt wird.

7. Membrananordnung (5) mit mindestens zwei Lagen (14, 15), zwischen denen Gewebe-Einlage (16) angeordnet wird, **dadurch gekennzeichnet, dass** mindestens eine Lage (14, 15) durch Spritzgießen in einer Kavität (19) einer Spritzgussform (18) erzeugt ist.

8. Membrananordnung (5) nach Anspruch 7, **dadurch gekennzeichnet, dass** in mindestens einer Lage (15) ein stiftartiges Element (11) formschlüssig integriert ist.

9. Membrananordnung (5) nach Anspruch 7 oder 8, **dadurch gekennzeichnet, dass** zumindest eine Lage (14, 15) aus einem Elastomer besteht.

10. Membrananordnung (5) nach Anspruch 9, **dadurch gekennzeichnet, dass** zwei benachbarte Lagen aus unterschiedlichen Elastomeren bestehen.

11. Membrananordnung (5) nach einem der Ansprüche 7 bis 10, **dadurch gekennzeichnet, dass** eine Lage (14) aus einem vorkonfektionierten Elastomer besteht und eine benachbarte Lage (15) aus einem spritzgegossenen Elastomer besteht.

12. Membrananordnung (5) nach einem der Ansprüche 7 bis 11, **dadurch gekennzeichnet, dass** eine Lage (14, 15) aus einem terpolymeren Elastomer, insbesondere einem Ethylen-Propylen-Dien-Kautschuk besteht.

13. Membrananordnung nach einem der Ansprüche 7 bis 12, **dadurch gekennzeichnet, dass** die Gewebe-Einlage (16) aus einem Polyamid besteht.

14. Verwendung einer Membrananordnung (5) nach einem der Ansprüche 7 bis 13 für die Trennung von zwei Räumen bei einem Membranventil und/oder einer Membranpumpe.
